# EUROPEAN PATENT SPECIFICATION

(11) **EP 3 204 753 B1**
(45) Date of publication and mention of the grant of the patent: **22.04.2020**
(21) Application number: 15786876.1
(22) Date of filing: 09.10.2015
(51) Int. Cl.: G01N 21/05, B01L 3/00

(54) **A HYDRODYNAMIC FOCUSSING METHOD AND RELATED DEVICE**
VERFAHREN ZUR HYDRODYNAMISCHEN FOKUSSIERUNG UND ZUGEHÖRIGE VORRICHTUNG
PROCÉDÉ DE FOCALISATION HYDRODYNAMIQUE ET DISPOSITIF ASSOCIÉ

(30) Priority: 09.10.2014 GB 201417867
(43) Date of publication of application: 16.08.2017
(73) Proprietor: The University Court Of The University Of Glasgow, Glasgow, Strathclyde G12 8QQ (GB)
(72) Inventor: YUAN, Xiaofei, Glasgow G11 5NQ (GB); YIN, Huabing, Glasgow G20 6DX (GB); GLIDLE, Andrew, Glasgow G11 6DT (GB)
(74) Representative: Mewburn Ellis LLP
(86) International application number: PCT/EP2015/073470
(87) International publication number: WO 2016/055646

(56) References cited:
- WO-A2-2005/042137
- US-A1- 2012 138 152
- US-A1- 2012 196 314
- Wyatt N Vreeland ET AL: "Lab on a Chip Lab on a Chip A facile route to the synthesis of monodisperse nanoscale liposomes using 3D microfluidic hydrodynamic focusing in a concentric capillary array", , 21 July 2014 (2014-07-21), pages 2365-2586, XP055244071, Retrieved from the Internet: URL:http://pubs.rsc.org/en/content/article pdf/2014/lc/c4lc00334a [retrieved on 2016-01-22]

## Description

The present invention relates to a hydrodynamic focussing method, and to a hydrodynamic focussing device particularly suited to implementation of the method.

Hydrodynamic focussing is an important technique that is often used in commercial flow cytometers and numerous other applications in the field of microfluidics such as rapid diagnostics and biosensors. In these types of applications cells are counted and/or analysed as they are directed through a narrow conduit, causing disruptions in a laser light beam or electrical flow which can be analysed by appropriate instruments. It is difficult to fabricate suspended physical conduits which are sufficiently narrow for this purpose because the conduits must have a diameter of only several micrometres. Hydrodynamic focussing is therefore used to define a narrow conduit from a flow of sheath fluid into which the sample fluid is then injected. Providing the sheath fluid and the sample fluid are laminar and differ sufficiently in their flow velocity then they will not mix and the sheath flow can be used to focus the sample flow down to a sufficiently narrow stream for analysis.

It is known to provide microfluidic hydrodynamic focussing devices for these purposes, which are sometimes provided on a substrate such as a microscope slide and in which the sample flow is directed generally in a plane which is parallel to the plane of the substrate.

Various hydrodynamic focussing techniques have been proposed previously, but most are only able to achieve two-dimensional confinement of the sample flow. The lack of proper confinement of the sample flow in a vertical direction (i.e. perpendicular to the plane of the sample flow) means that most of these known techniques provide limited control of the analyte in the sample flow. For example, the analyte can be missed by the detector thereby compromising the accuracy and efficiency of the analysis.

In order to address some of these problems, various techniques have been developed to provide three-dimensional hydrodynamic focussing. Such examples include a so-called "Dean flow" arrangement, a chimney-like arrangement configured to inject the sample flow perpendicular to a sheath flow, and micromoulded 3D structured PDMS devices in which sheath flows are directed perpendicular to, or at an acute angle to, the plane of the sample flow in order to achieve vertical focussing. However, it has been found that these various techniques can only achieve a relatively large confinement size to the sample flow, are highly dependent on particle/cell properties, and are susceptible to variation in flow rates such as are caused by pressure fluctuations or variations arising in the structure of the devices during fabrication. These limitations give rise to poor control over the position and poor positional accuracy of the focussed sample flow. Furthermore, because the flow rates must be very high in these systems, problems can arise regarding optical signal acquisition when acquisition times are long (i.e. greater than a few milliseconds). Additionally, introducing sheath flows in a direction which is perpendicular to, or at an acute angle to, the sample stream can often affect both the vertical and the horizontal focus of the sample stream simultaneously, leading to a loss of control of the shape and position of the sample stream.

Because hydrodynamic focussing relies on a high proportion of sheath flow fluid to sample flow fluid, focussed samples that are collected are generally substantially diluted by mixing with the sheath flow fluid. This is undesirable if, for example, the detection process is to be used as a means of sorting or culturing of a small number of cells that been identified from within a large population.

US patent application, publication number US 2012/0138152 A1 describes an apparatus for creating sheathed flow includes an inlet section comprising an array of tubes including at least one sheath inlet port and a sample inlet port, a flow focusing section downstream from the inlet section, an optical access section downstream from the flow focusing region and comprising opposing flat surfaces, and an outlet section downstream from the optical access section, wherein the apparatus is operable to create a sheathed flow around a fluid introduced into the sample inlet port and to maintain the sheathed flow through the optical access section.

Vreeland et al. in "A facile route to the synthesis of monodisperse nanoscale liposomes using 3D microfluidic hydrodynamic focusing in a concentric capillary array", Lab Chip, 2014, 14,2403, describe a microscale device to enable the one-step continuous flow assembly of monodisperse nanoscale liposomes using three-dimensional microfluidic hydrodynamic focusing (30-MHF) in a concentric capillary array.

International patent application, publication number WO 2005/042137 A2 describes a microfabricated sheath flow structure for producing a sheath flow includes a primary sheath flow channel for conveying a sheath fluid, a sample inlet for injecting a sample into the sheath fluid in the primary sheath flow channel, a primary focusing region for focusing the sample within the sheath fluid and a secondary focusing region for providing additional focusing of the sample within the sheath fluid.

US patent application, publication number US2012/0196314 A1 describes a microfluidic device comprises inlets for a sample flow and an out-of-plane focusing sheath flow, and a curved channel section configured to receive the sample flow and out-of plane focusing sheath and to provide hydrodynamic focusing of the sample flow in an out-of-plane direction, the out-of plane direction being normal to a plane including the curved channel.

It is therefore a first object of the present invention to provide an improved hydrodynamic focussing and sample collection device, and a second object of the present invention to provide an improved hydrodynamic focussing method.

According to a first aspect of the present invention, there is provided a hydrodynamic focussing and sample collection device according to claim 1.

It is possible for the device to have more than four sheath flow inlet channels and more than four collection channels.

The device may have a plurality of discrete said sample outlet collection channels.

Conveniently, the device may be a microfluidic device formed on a substrate and having a plurality of layers or an assembly of capillary tubes.

If the device is constructed on a substrate, then the sample flow inlet channel and at least some of the sheath flow inlet channels may each extend in respective planes parallel to the plane of the device substrate.

According to a second aspect of the present invention, there is provided a hydrodynamic focussing and sample collection method in which a sample stream of fluid is focussed in three-dimensions by a sheath fluid for collection, according to claim 6.

Said inlet and/or outlet flow rates of said sheath streams may be adjusted to focus said sample stream into the sample outlet collection channel.

Optionally, the focussed sample stream is selectively directed into one of a plurality of said sample outlet collection channels.

Advantageously removal of a proportion of the sheath flow streams by the sheath flow outlet collection channels that are positioned downstream of the sample detection zone, significantly reduces dilution of the sample stream that is collected by the sample flow collection channel for. Either the sorting of particles in this collected sample stream into rare and less rare species using information obtained from analysis in the detection zone, or harvesting the particles for other purposes may be disadvantaged if the collected sample stream is too dilute.

It is possible to provide more than four sheath flows.

Preferably, the flow rate of the sample stream along the sample flow channel is between 10 µm/s and 10 m/s.

Conveniently, the method is microfluidic.

So that the invention may be more readily understood, and so that further features thereof may be appreciated, examples of hydrodynamic focussing devices and methods will now be described by way of example with reference to the accompanying drawings in which:
Figure 1 is a schematic x-y-z projection view showing an exemplary device in accordance with the present invention, with a focussed sample stream running through the device;
Figure 2 is a schematic x-y projection view showing the device of figure 1;
Figure 3 is a schematic cross-sectional view showing the focussed sample stream visible in figures 1 and 2, in combination with top and bottom sheath flows;
Figure 4 shows part of a device in accordance with the present invention, in plan view, during its fabrication;
Figure 5 is a schematic cross-sectional view showing aspects of the fabrication method;
Figure 6 is a top plan view of the device at a stage during its fabrication;
Figure 7 is a view corresponding generally to that of figure 6, but which shows the completed device;
Figure 8 is an enlarged bright field view, from above, showing part of the device in accordance with the present invention;
Figure 9 is a view corresponding generally to that of figure 8, taken under florescence and which depicts a sample stream flowing through the device;
Figure 10 is a view similar to that of figure 9, but which depicts the sample stream under the influence of different sheath flow conditions to those shown in figure 9;
Figure 11 is a bright field image, from above, showing a detailed region of the device;
Figure 12 comprises three confocal images in the y-x, z-x and z-y planes respectively and which depict sample stream which is unfocussed in the z-direction;
Figure 13 comprises three confocal images corresponding generally to those of figure 12, but which depict the sample stream being focussed in the z-direction by equal top and bottom sheath streams;
Figure 14 comprises three confocal images corresponding generally to those of figure 13, but which depict the sample stream being focussed in the z-direction by faster equal top and bottom sheath streams;
Figure 15 comprises three confocal images corresponding generally to those of figure 14, but which depict the sample stream being focussed in the z-direction by still faster equal top and bottom sheath streams;
Figure 16 comprises three confocal images corresponding generally to those of figure 14, but which depict the sample stream being focussed in the z-direction by top and bottom sheath streams in which the bottom sheath stream is 4x faster than the top sheath stream;
Figure 17 comprises three confocal images corresponding generally to those of figure 15, but which depict the sample stream being focussed in the z-direction by top and bottom sheath streams in which the bottom sheath stream is 2x faster than the top sheath stream;
Figure 18 is a fluorescence image depicting a collection channel of the device receiving a focussed sample stream;
Figure 19 is a fluorescence image depicting a sorting arrangement downstream of the collection channel of figure 18, and which shows the sample stream being directed in a first direction;
Figure 20 is an image corresponding generally to that of figure 19, but which shows the sample stream being directed in a second direction;
Figure 21 is a perspective view showing a multiple glass capillary tube assembly which can be used to fabricate a device;
Figure 22 is a top plan view showing the capillary tube assembly of figure 21 following a pulling a separating process which is used to form two sub-assemblies for use in the device;
Figure 23 is a view similar to that of figure 22 but which shows the two sub-assemblies inserted into opposite ends of an interconnecting glass tube;
Figure 24 is a magnified view showing in greater detail the region of figure 23 denoted by rectangle A; and
Figure 25 is a view similar to that of figure 22 but which shows another configuration of capillary tube based device.

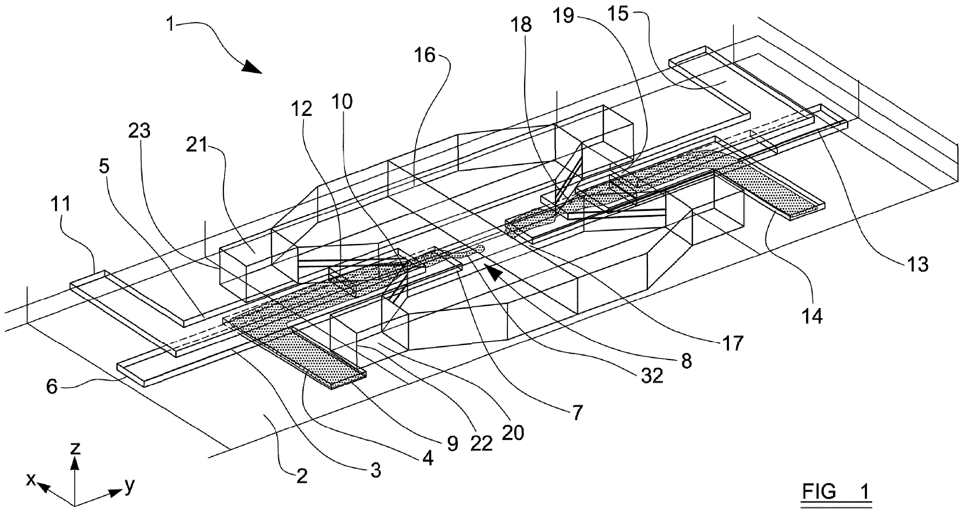

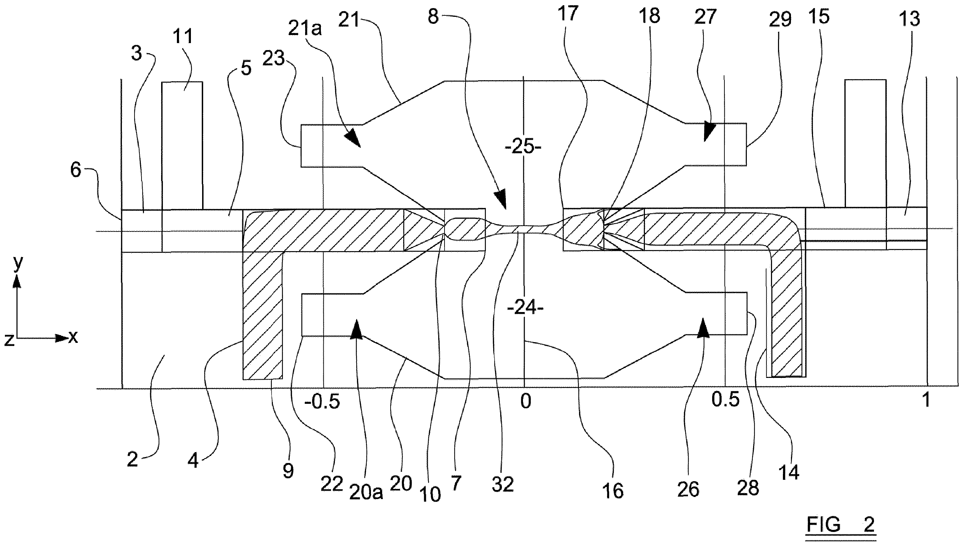

Turning now to consider the drawings in more detail, figures 1 and 2 show an exemplary multilayer flow focussing device 1 according to the present invention. The device can be fabricated via any convenient technique such as, for example, photolithography, lamination, 3-D printing, micro-moulding, injection moulding, depending on its intended use and the materials selected for its construction.

In one embodiment of the device 1, as shown in figures 1 and 2, a planar substrate 2 such as a microscope slide can be used to support a channel structure, and for convenience a method employing photolithography can be used to fabricate such a device, as will be described in more detail below.

It is to be noted that the device 1 includes a vertically (i.e. in the z-direction perpendicular to the plane of the substrate 2) stacked arrangement of three discrete and parallel linear flow channels, comprising: a bottom channel 3 proximate the substrate 2; a middle channel 4; and a top channel 5 distal to the substrate 2. The bottom and top flow channels 3, 5 are provided to direct respective bottom and top streams of a sheath fluid into contact with a slower flowing stream of sample fluid which will be directed through the middle channel 4. The bottom channel 3 thus represents a bottom sheath flow inlet channel, the middle channel 4 thus represents a sample flow inlet channel, and the top flow channel 5 thus represents a top sheath flow inlet channel. All of the inlet channels 3, 4, 5 are arranged so as to be parallel to the plane of the substrate 2.

It is envisaged that in some embodiments the bottom and top sheath inlet flow channels 3, 5 may have a height of approximately 15 µm, whilst the sample flow inlet channel 4 may have a height of approximately 10 µm.

The bottom sheath flow inlet channel 3 in the embodiment illustrated in figure 1 is entirely linear and extends from an inlet 6 at one end of the substrate 2 to an outlet 7 located adjacent a detection zone 8 located generally centrally relative to the substrate 2. The middle sample flow inlet channel 4, however, is shown as being cranked in the embodiment of figures 1 and 2 such that it has a transversely extending region extending from an inlet 9 to the main longitudinal linear region of the channel 4. The sample flow inlet channel 4 has an outlet 10 at the opposite end of its main linear region, which is spaced slightly from the outlet 7 of the bottom sheath flow inlet channel 3. Similarly, the top sheath flow inlet channel 5 is also cranked and has a transversely extending region extending from an inlet 11 to the main linear region of the channel 5. The top sheath flow inlet channel 5 also has an outlet 12 at the opposite end of its main linear region, the top outlet 12 being spaced slightly from the sample flow outlet 10. It is to be appreciated, however, that the three channels can be configured to have their respective inlets elsewhere; it is the parallel orientation of their main linear regions that is of primary significance to the implementation of the invention.

As illustrated most clearly in figure 2, the region of the sample flow inlet channel 4 located immediately upstream (i.e. to the left in the orientation illustrated in figure 2) of its outlet 10 is tapered so that the channel narrows towards the outlet 10. In some embodiments it is proposed that the outlet 10 of the sample flow inlet channel may be approximately 15 µm in width, such that its dimensions are 15 µm x 15 µm.

Spaced across the detection zone 8 from the stacked sheath flow inlet channels 3, 5 and the middle sample flow inlet channel 4, there are provided three corresponding discrete outlet collection channels 13, 14, 15. The stacked outlet collection channels comprise a bottom sheath outlet collection channel 13, a middle sample outlet collection channel 14, and a top sheath outlet collection channel 15 and so each correspond to a respective one of the aforementioned flow inlet channels 3, 4, 5. Furthermore, it will be noted that the outlet collection channels 13, 14, 15 in the arrangement illustrated are each configured as a mirror image (about a detection transverse detection plane 16 passing through the detection zone 8) of their respective flow inlet channels 3, 4, 5, although this is not an essential feature.

The bottom sheath outlet collection channel 13 thus has an inlet 17 which is spaced from the outlet 7 of the bottom sheath flow inlet channel 3 across the detection zone 8, and which is thus configured to receive a sheath stream directed towards it and across the detection zone 8 from the bottom sheath flow inlet channel 3. Similarly, the middle outlet collection channel 14 has an inlet 18 arranged in spaced-apart relation to the outlet 10 of the sample flow inlet channel 4 across the detection zone 8, and which is thus configured to receive a sample stream directed towards it from the sample flow inlet channel 4. Likewise, the top outlet collection channel 15 has an inlet 19 arranged in spaced-apart relation to the outlet 12 of the top sheath flow inlet channel 5 across the detection zone 8, and which is thus configured to receive a sheath stream directed towards it from the top sheath flow inlet channel 5.

The device 1 further comprises a pair of side channels 20, 21 which are of substantially identical configuration to one another and located on opposite sides of the stacked sheath and sample flow inlet channels 3, 4, 5. The side channels have respective inlets 22, 23 which are configured to receive respective flows of sheath fluid for direction along the side channels 20, 21. As will be noted, the side channels 20, 21 have a significantly greater internal cross-sectional height than the sample flow inlet channel 4 and the top and bottom sheath flow inlet channels 3, 5. Indeed, the side channels 20, 21 preferably have a height approximately equal to, or slightly greater than the overall combined height of the stacked sheath and sample flow inlet channels 3, 4, 5.

In the embodiment illustrated in figures 1 and 2, the inlet regions of the side channels each define a respective side sheath flow inlet channel 20a, 21a and open, via respective notional outlets, into respective larger central chambers 24, 25 which are open to the detection zone 8. Downstream of the detection zone 8, the side channels 20, 21 narrow from their chambers 24, 25 towards respective outlet regions 26, 27 via respective notional inlets. The outlet regions 26, 27 define respective side sheath outlet collection channels and each terminate in a respective outlet 28, 29. The outlet regions 26, 27 of the side channels are of similar configurations to the inlet regions 20a, 21a, and it will thus be noted that the outlet regions 26, 27 of the side channels are located on opposite sides of the stacked outlet collection channels 13, 14, 15.

As will be explained in more detail below, the unique configuration of the device 1, and in particular its stacked array of parallel bottom and top sheath flow inlet channels 3, 5 and middle sample flow inlet channel 4, which are all located between the side sheath flow channels 20, 21 effectively decouples flow focussing in the vertical and horizontal directions and permits independent control of the vertical and horizontal focus, and the vertical and horizontal position, of a sample flow stream. It will be noted that central regions of the sheath flow inlet channels 3, 5, 20, 21 are effectively distributed generally radially around the central sample flow inlet channel 4, as viewed axially along the central region of the sample flow inlet channel 4.

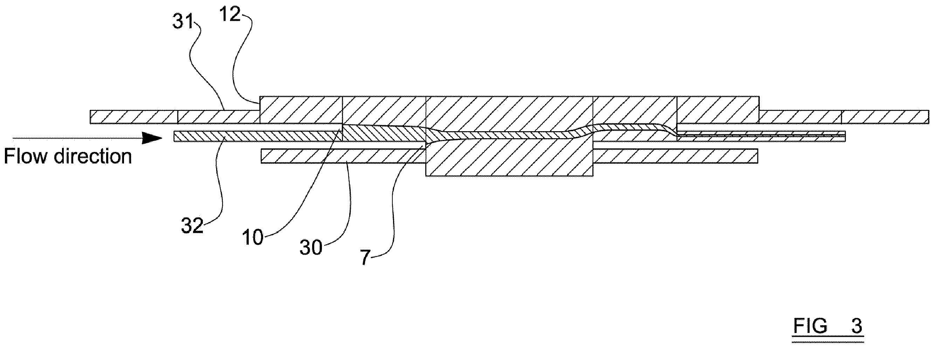

In use, bottom and top sheath flows 30, 31 of a suitable sheath fluid are directed simultaneously along the bottom and top sheath flow inlet channels 3, 5 respectively as shown schematically in figure 3. At the same time, side sheath flows of sheath fluid (not shown in figure 3) will be directed in the same direction (i.e. left to right in the orientation shown in the figures) through the side sheath flow channels 20, 21 and into their respective central chambers 24, 25 through their inlet regions 20a, 20b, whilst a sample stream 32 will be directed along the middle flow inlet channel 4, also in the same direction. The sample stream 32 arising from these simultaneous multiple flows is shown schematically in the shaded region of figures 1 and 2.

As will therefore be appreciated, the bottom and top sheath flows 30, 31 will each exit their respective flow inlet channels 3, 5 via the outlets 7, 12 in a direction which is substantially parallel to the direction in which the sample flow 32 exits the middle flow inlet channel 4 via its outlet 10. The resulting bottom and top sheath streams 30, 31 thus make contact with the sample stream therebetween in a parallel manner, with no or only a negligible component in the vertical direction (i.e. the z direction as illustrated).

The side sheath flows both make generally parallel contact with the sample stream 32, which is constrained between the bottom and top sheath streams 30, 31, across the detection zone 8. Whilst it will be noted that the configuration of the side sheath flow inlet channels 20, 21, and in particular their central chambers 24, 25, illustrated means that the side sheath streams will be introduced into contact with the sample stream 32 with a small component of sideways (x) direction, this will occur at a point along the sample stream 32 at which it is already constrained vertically by the bottom and top sheath streams 30, 31. Furthermore, these small sideways components will cancel each another out because they are oppositely directed. The sample stream 32 is thus directed across the detection zone and towards the inlet 18 of the sample outlet collection channel 14 between the bottom and top sheath streams 30, 31 and between the side sheath streams.

By carefully controlling the bottom, top and side sheath streams through their respective flow channels 3, 5, 24, 25, relative to the sample stream 32 directed through the middle sample flow channel 4, the sample stream 32 can be focussed both vertically and horizontally relative to the plane of the substrate 2, and its vertical and horizontal position within the detection zone can be independently controlled, as will be described in more detail below.

As indicated above, the focussing device 1 of the present invention may conveniently be fabricated by a photolithographic technique. One such proposal involves the use of SU-8 negative photoresist and sacrificial layers of AZ4562 positive photoresist.

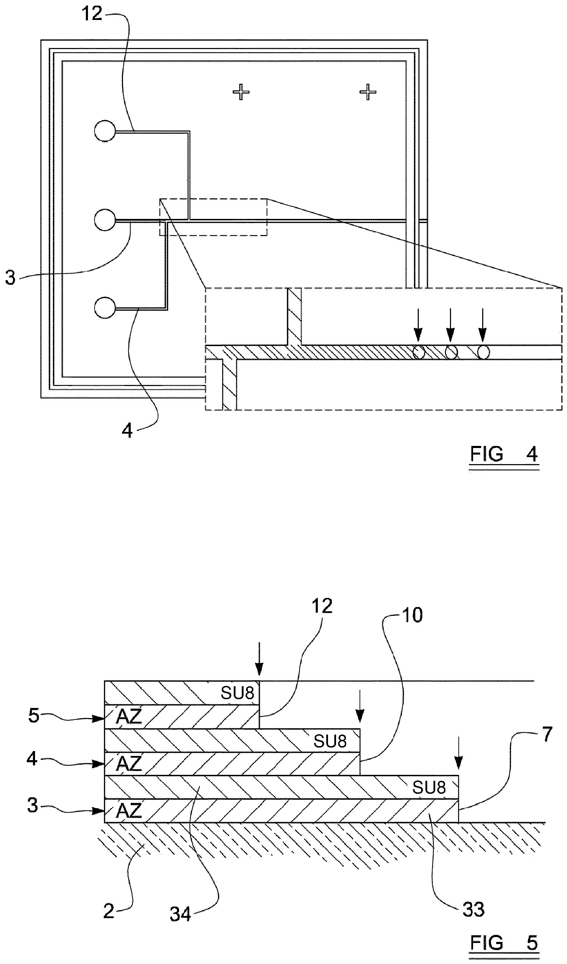

The basic photolithographic scheme proposed for fabrication of the focussing device 1, and in particular its stacked array of parallel flow channels 3, 4, 5 is as follows, having regard to figures 4 and 5: i) the substrate 2 such as a coverslip or microscope slide is initially cleaned with acetone and methanol; ii) a first sacrificial layer 33 of AZ4562 photoresist is then applied to the substrate 2 via a spin coating technique; iii) the sacrificial layer 33 is then exposed to UV radiation through a mask to define the bottom sheath flow inlet channel 3, followed by a suitable developing process of a type known *per se*, and then a further flood exposure step using UV radiation; iv) a layer 34 of SU-8 is then formed on top of the sacrificial layer 33 by spin coating followed by UV exposure through a mask and a developing step; v) steps ii - iv are then repeated twice, in respect of the middle sample flow inlet channel 4 and the top sheath flow inlet channel 5 respectively as shown schematically in Figure 5; vi) the entire device is then soaked in acetone to remove the AZ4562 sacrificial layers and thereby create the multi-layered device 1.

As will be appreciated by those of skill in the art of microfluidic devices, it is necessary to enclose the focussing device 1 resulting from the above-described fabrication process with a lid (not shown) applied to the top layer of SU-8. In this regard, it has been found that a lid formed from Polydimethylsiloxane (PDMS) is ideal due to its highly transparent nature and ease of production. However, given the usually weak bond between SU-8 and PDMS, it is proposed to apply a thin layer of Poly(disilanylenethynylene) (PDSE) to the topmost layer of SU-8 in the device 1, which the inventors have discovered significantly improves the bond strength between SU-8 and PDMS. The transparent PDMS lid can thus be securely bonded to the top layer of SU-8 to complete the device 1.

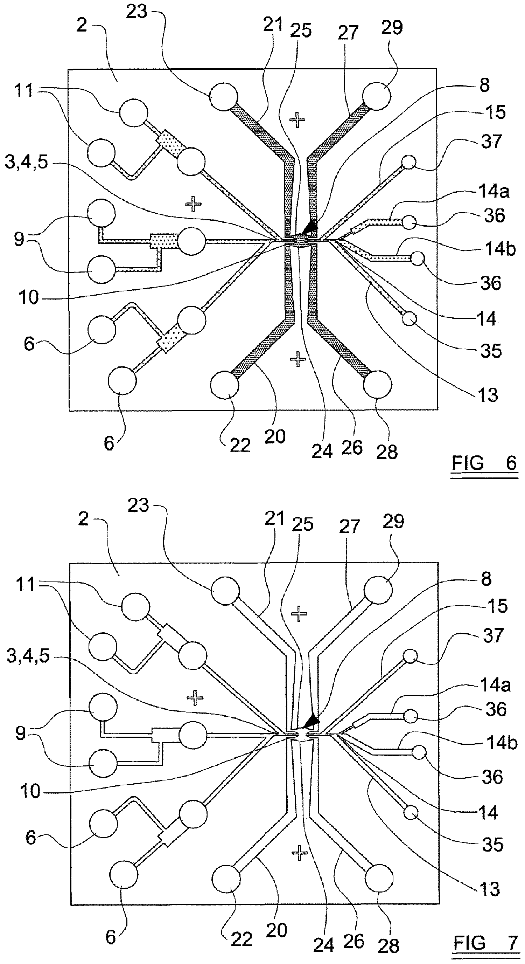

Figure 6 illustrates an exemplary prototype device 1, in a partially completed condition prior to removal of the sacrificial AZ4562 layers. Figure 7 generally corresponds, but illustrates the finished device 1 following removal of the sacrificial AZ4562. The respective inlets 6, 9, 11 (provided in pairs in the embodiment illustrated in figures 6 and 7) to the bottom sheath flow inlet channel 3, the middle sample flow inlet channel 4, and the top sheath flow inlet channel 5 respectively are indicated to the left-hand side of the device 1 in the orientation illustrated in figures 6 and 7, noting in this regard that the inlets 6, 9, 11 are in slightly different positions to those shown in the arrangement illustrated in figures 1 and 2. As will be noted, each pair inlets 6, 9, 11 are in direct fluid communication with respective inlet regions of the respective flow inlet channels 3, 4, 5 which then come together upstream of the detection zone 8, to adopt their linear and parallel configuration described above. The inlets 22, 23 of the two side sheath flow channels 20, 21 are also shown towards the left hand side of the device illustrated in figure 7.

To the right hand side of the device 1, as illustrated in Figures 6 and 7, there can be seen the bottom, middle, and top outlet collection channels 13, 14, 15, which are each linear and stacked relative to one another immediately downstream of the detection zone 8, but which then branch out in different directions towards respective outlets 35, 36, 37. Additionally, in the embodiment illustrated in figures 6 and 7, the sample outlet collection channel 14 is bifurcated into a pair of discrete sorting channels 14a, 14b, each of which has a respective outlet.

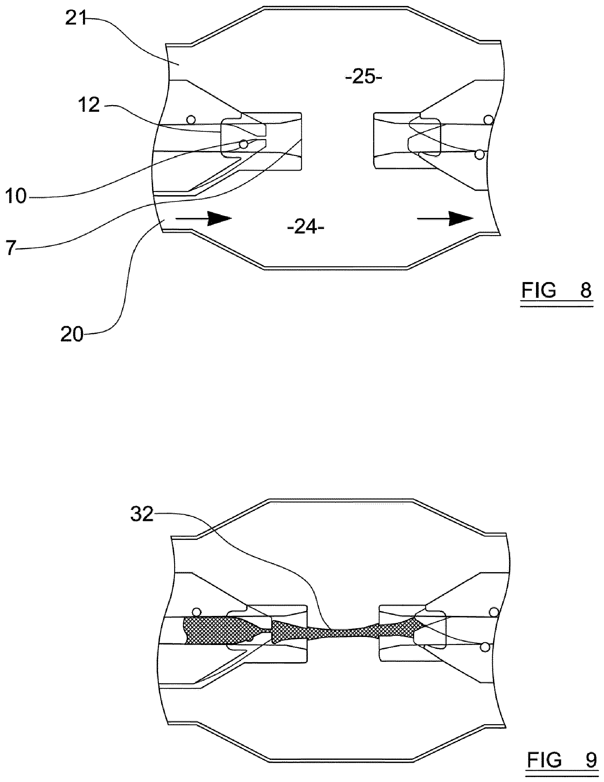

Turning now to consider figures 8 to 10, further detail regarding the functionality of the device 1, and the associated method of the present invention will now be described. In this regard it is to be noted that figure 8 represents an enlarged bright field image from above of the detection zone 8 of the device 1, showing the outlets 7, 10, 12 of the stacked bottom, middle and top flow inlet channels 3, 4, 5, the central chambers 24, 25 of the side flow channels 20, 21 between their inlet and outlet regions, and the inlets 17, 18, 19 of the stacked bottom, middle and top outlet collection channels 13, 14, 15.

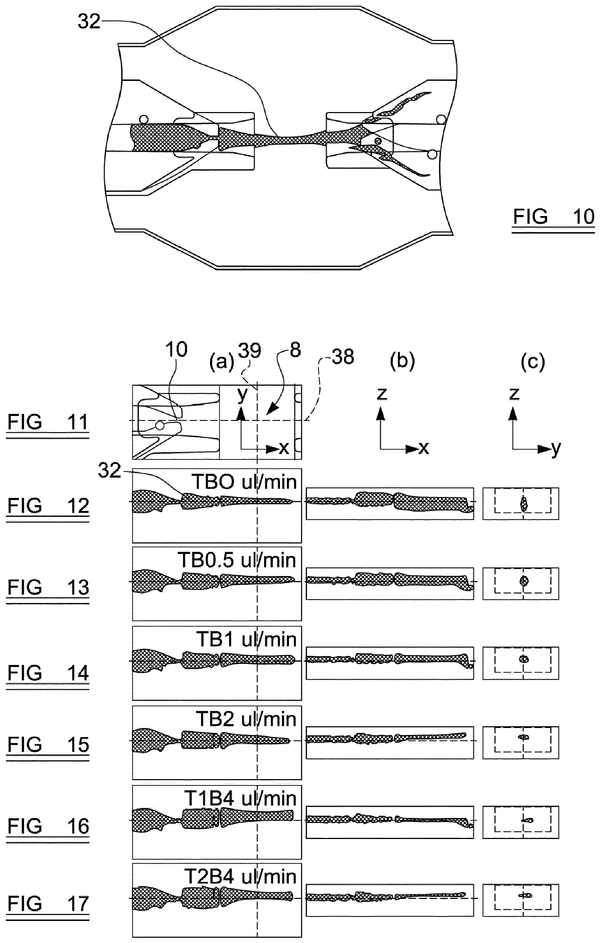

As already explained above, the device 1 will normally be used by directing a flow of sheath fluid though the bottom flow inlet channel 3, the top flow inlet channel 5, and two side sheath flow channels 20, 21 simultaneously, whilst a flow of sample fluid is directed through the middle sample flow inlet channel 4. However for illustrative purposes figures 9 and 10, which are fluorescence images from the same viewpoint as figure 8, show the device 1 with sample fluid being directed through the middle sample inlet channel 4 and sheath fluid being directed only through the two side sheath flow channels 20, 21 and hence their central chambers 24, 25. This is to illustrate the ability of the device 1 to focus a sample stream 32 directed across the detection zone 8 from the outlet 10 of the sample flow inlet channel 4, by controlling only the flow of sheath fluid through the side flow channels 20, 21. In this regard it is to be noted that figures 9 and 10 show a sample stream 32 of an aqueous rhodamine solution being focussed in the horizontal direction (i.e. the x-direction parallel to the plane of the substrate 2) under the action of a faster flowing sheath flow of water directed through the side channels 20, 21. Figure 9 shows the degree of horizontal focus imparted to the sample stream 32 by a first sheath flow rate through the side channels 20, 21, whilst figure 10 shows the degree of horizontal focus imparted to the sample stream 32 by a second, higher, sheath flow rate through the side channels 20, 21. As will be noted, in both cases contact between the faster flowing side sheath streams (not visible in the fluorescence images) and the slower flowing sample stream 32 across the detection zone 8 is effective to focus the sample fluid into a narrow sheath stream 32. With the sheath flow through the side channels 20, 21 being even faster in figure 10, it will be noted that the sample stream 32 becomes even more tightly focussed in the horizontal (x) direction. As will thus be appreciated, by controlling the speed of the side sheath flows relative to the sample flow, the degree of horizontal focus of the sample stream 32 can be adjusted and controlled. Furthermore, as will be explained in more detail below, by independently varying and controlling the flow rates of the sheath fluid through the two side flow channels 20, 21 relative to one another, the horizontal position of the focussed sample stream 32 therebetween can be adjusted and controlled.

In a similar manner, by independently varying and controlling the flow of sheath fluid through the bottom and top sheath flow inlet channels 3, 5, the vertical focus and position of the sample stream 32 can also be controlled. This is conveniently illustrated with reference to figures 11 to 17.

Figure 11a is an enlarged bright field image, from above, showing the region of the sample flow channel outlet 10, where it opens out into the detection zone 8. Figures 12a-17a, arranged in a column below figure 11a, are fluorescence images from the same viewpoint as figure 11a, showing the sample stream 32 arising from various different combinations of side, bottom and top sheath flow rates through the side sheath flow channels 20, 21 and the bottom and top sheath flow inlet channels 3, 5. Figures 12b-17b correspond to figures 12a-17a, but show the resulting sample streams 32 as viewed in the X-Z plane from the dashed line 38 in figure 11a through the detection zone 8. Figures 12c-17c also correspond to figures 12a-17a but show the resulting sample streams 32 as viewed in the Y-Z plane from the dashed line 39 in figure 11a through the detection zone 8.

Figures 12a-c show the sample stream 32 in an entirely unfocussed state in the vertical (z) direction through the detection zone, arising from there being zero sheath flow through either the bottom or the top sheath flow inlet channels 3, 5, but with equal flow rates through the two side flow channels 20, 21. As will therefore be noted, the sample stream 32 is focussed in the horizontal x direction, but is entirely unfocussed in the vertical z direction.

Figures 13a-c show the sample stream 32 in a focussed condition arising from equal (0.5 µl/min) flows of sheath fluid through the bottom and top sheath flow inlet channels 3, 5.

Figures 14a-14c show the sample stream in a more tightly focussed condition arising from equal but higher (1 µl/min) flows of sheath fluid through the bottom and top sheath flow inlet channels 3, 5. The tighter focus of the sample stream 32 in this flow regime can clearly be seen by comparing figure 14b with figure 13b, and also figure 14c with figure 13c.

Figures 15a-15c show an even more tightly focussed sample stream 32 arising from equal but even higher (2 µl/min) flows of sheath fluid through the bottom and top sheath flow inlet channels 3, 5.

Figures 16a-16c show the sample stream in a different focussed state, arising from unequal flows of sheath fluid through the bottom and top sheath flow inlet channels 3, 5. In particular, these figures show the situation arising when the flow rate of sheath fluid through the bottom channel 3 is four times greater than the flow rate of sheath fluid through the top channel 5. In the particular condition illustrated, the bottom sheath flow rate is 4 µl/min, whilst the top sheath flow rate is 1 µl/min. Figures 17a-17c show a similar condition where the bottom sheath flow rate remains at 4 µl/min, but where the top sheath flow rate has been increased slightly to 2 µl/min. As will be noted from figures 16c and 17c in particular, the faster bottom sheath flow has the effect of urging the focussed sample stream 32 upwards slightly within the detection zone. By independently controlling the relative bottom and top sheath flow rates, the vertical position of the focussed sample stream 32 can be controlled and "steered". In a similar way, by independently controlling the relative side sheath flows through the side flow channels 20, 21, the horizontal position of the focussed sample stream 32 can also be controlled and "steered".

As will therefore be appreciated, the device 1 and method of the present invention permits adaptive control of both the vertical and horizontal focus of the sample stream 32, and also the vertical and horizontal position of the sample stream 32 within the detection zone. This represents a significant advantage over prior art arrangements and methods because it permits very accurate direction of the sample stream 32 though the detection zone 8 for accurate detection and analysis, and also allows the sample stream to be accurately targeted at the inlet 18 of the sample outlet collection channel 14, with reduced risk of misalignment and consequential dilution of the sample stream arising from the capture of sheath fluid by the outlet collection channel 14. The sheath flow streams are thus effectively removed from the combined flow and directed into the sheath flow collection channels rather than into the sample collection channel 14. Furthermore, it is envisaged that alternative embodiments of the device 1 may have more than one discrete sample collection channel 14 (for example arranged in a vertical and/or horizontal array), in which case this accurate control of the sample stream 32 may be used to direct the sample stream 32 selectively at different collection channels.

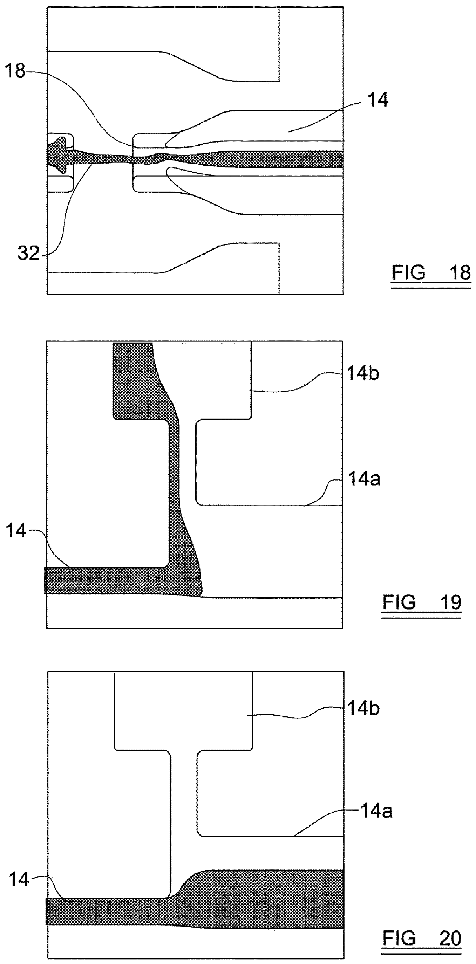

Figure 18 illustrates in more detail the inlet 18 of the sample outlet collection channel 14, and shows the focussed stream 32 being accurately directed through the inlet and into the collection channel 14. As will be noted, the inlet region of the collection channel 14 immediately downstream of the actual inlet 18 is straight and substantially parallel to the sample flow inlet channel 4 from which the sample stream 32 has been directed. Furthermore, by accurately focussing the controlling the sample stream 32 in the manner described above, the sample stream can be directed through the inlet 18 and into the sample outlet collection channel 14 with high accuracy and in a direction parallel to the longitudinal Figures 19 and 20 both show a bifurcated region of the sample outlet collection channel 14, as mentioned briefly above, where the channel 14 splits into two discrete sorting channels 14a, 14b for selective sorting and collection of the sample fluid downstream of the detection zone 8. Figure 19 shows the sample stream being deflected into the upper sorting channel 14b, whilst figure 20 shows the sample stream being directed into the lower sorting channel 14a. The sample stream 32 can be controlled in this manner and selectively directed into either of the sorting channels 14a, 14b by the application of pressure changes to the stream in a manner known *per se.* However, the high degree of focus and positional control of the sample stream 32 through the detection zone 8, and the straight region of the sample outlet collection channel 14 upstream of its bifurcation into the sorting channels 14a, 14b means that these controlling pressure changes will not disrupt the sample stream 32 in the detection zone 8, where it will remain tightly and accurately focussed with minimal disturbance.

It has been found by experiment that the most accurate focussing and control of the sample stream 32 in the manner described above can be achieved when the bottom and top sheath flows are directed along their respective bottom and top flow inlet channels 3, 5 with a flow rate that is at least double, and most preferably approximately five times greater than, the flow rate of the sample fluid along the middle sample flow inlet channel 4. Also, it has been found that significantly improved focussing and control of the sample stream 32 can be achieved when the flow rate of the side sheath flows along the side flow channels 20, 21 is greater than the flow rate of the bottom and top sheath flows in the bottom and top inlet channels 3, 5.

Whilst the invention has been described above with reference to specific embodiments of device, and with particular reference to the device being fabricated by a photolithographic technique, it is to be appreciated that devices in accordance with other embodiments may have slightly different configurations, and/or may be fabricated by different techniques.

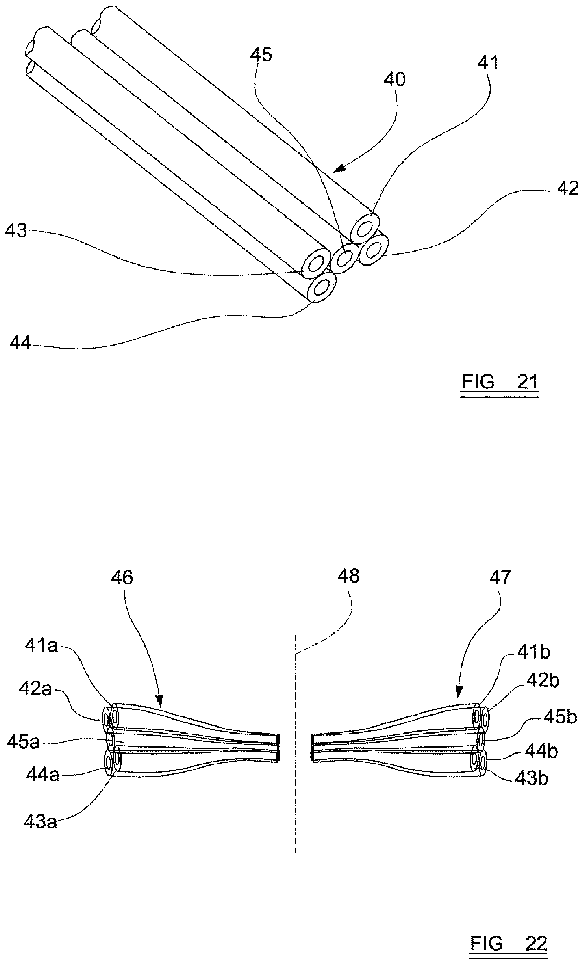

An example of a device which does not form part of the invention will now be described with reference to figures 21 to 24.

Figure 21 is an enlarged view showing an assembly 40 which comprises five parallel glass capillary tubes 41-45. The capillary tubes may be fused or otherwise bonded together along their lengths, and are arranged such that four of them 41-44 lie at the corners of a notional quadrilateral lying in a plane orthogonal to the aligned axes of the tubes, with the fifth tube 45 being centrally located between the others.

Figure 21 is an enlarged view showing an assembly 40 which comprises five parallel glass capillary tubes 41-45. The capillary tubes may be fused or otherwise bonded together along their lengths, and are arranged such that four of them 41-44 lie at the corners of a notional quadrilateral lying in a plane orthogonal to the aligned axes of the tubes, with the fifth tube 45 being centrally located between the others.

Figure 22 illustrates the capillary assembly 40 of figure 21 after it has been pulled and manipulated such that both ends of the "corner" capillary tubes 41-44 have been moved outwardly away from the central tube 45 (which remains substantially straight), and then the resulting arrangement split in the middle where substantially no movement of the "corner" tubes 41-44 has occurred. Two sub-assemblies 46, 47 are thus formed which may represent mirror images of one another about a notional plane of symmetry 48 at the point where the initial assembly 40 was split. The subassemblies 46, 47 are shown slightly spaced apart from one another in figure 22. In the orientation illustrated, the left-hand subassembly 46 represents an inlet part and the right-hand subassembly 47 represents an outlet part.

As will thus be appreciated, the inlet part 46 comprises a centrally located and generally linear inlet capillary tube 45a, and an array of four converging inlet capillary tubes 41a, 42a, 43a, 44a distributed radially there-around. All of the inlet tubes have a respective inlet opening at their left-hand end and a respective outlet opening at their right-hand end (in the orientation illustrated).

Similarly, the outlet part 47 comprises a centrally located and generally linear outlet capillary tube 45b, and an array of four diverging outlet capillary tubes 41 b, 42b, 43b, 44b distributed radially there-around. All of the outlet tubes have a respective inlet opening at their left-hand end and a respective outlet opening at their right-hand end (in the orientation illustrated).

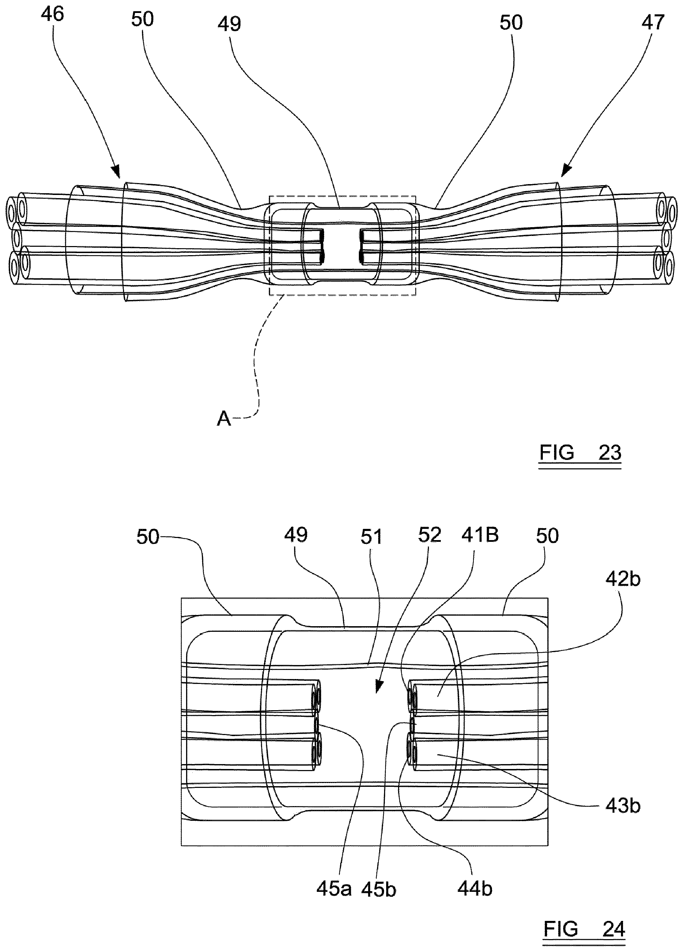

Turning now to consider figure 23, the two sub-assemblies are shown interconnected, at their respective narrow ends, by a length of glass tube 49. The glass tube 49 may be square or rectangular in cross-section so that the narrow end of each subassembly 46, 47 can be tightly inserted into a respective end of the glass tube 49 as shown. The subassemblies remain axially spaced apart by a short distance, such that the outlet openings of the inlet capillary tubes 41a-45a are spaced from the inlet openings of the outlet capillary tubes 41b-45b. The central inlet and outlet capillary tubes 45a, 45b are axially aligned with one another, and each of the converging inlet capillary tubes 41a-44a of the inlet part 46 are also aligned with a respective diverging outlet capillary tube 41b-44b of the outlet part 47. It is proposed that the inlet and outlet parts 46, 47 may be fixed in position within the glass tube 49, and in the experimental arrangement illustrated this was achieved using heat shrink tubing 50 and adhesive.

Turning now to consider figure 24, which is a magnified view showing the area denoted A in figure 23 in more detail, it will be appreciated that the glass tubing 49 effectively forms a detection chamber 51, with the space 52 defined therein between the outlet openings of the inlet capillary tubes 41a-45a and the inlet openings of the outlet capillary tubes 41b to 45b defining a detection zone similar to the detection zone 8 of the embodiment described above with reference to figures 1 to 8. Furthermore, it will also be appreciated that the central inlet capillary tube 45a defines a sample flow inlet channel (analogous to the middle inlet channel 4 of the previously described embodiment) and the central outlet capillary tube 45b defines a sample outlet collection channel (analogous to the middle outlet collection channel 14 of the previously described embodiment), whilst the outer inlet capillary tubes 41a-44a define respective sheath flow inlet channels and the outer outlet capillary tubes 41b-44b define corresponding respective sheath flow outlet collection channels.

It is proposed that the inlet openings to the inlet capillary tubes 41a-45a may be connected to appropriate upstream pump arrangements to direct respective fluid flows along the tubes and across the detection zone 52, whilst the outlet openings of the outlet tubes 41b-45b may be connected to an appropriate sorting arrangement downstream of the device illustrated in figure 23.

As will therefore be appreciated, the device described above and illustrated in particular in figures 23 and 24 will function in substantially the same manner as the previously described embodiment. In particular, when a sample fluid is directed across the detection zone 52 from the outlet opening of the central inlet channel 45a, between respective sheath streams directed through the inlet capillary tubes 41a-44a, it can be focussed and accurately directed into the inlet opening of the central outlet capillary tube 45b for collection, via independent control and adjustment of the four sheath flow streams.

It has been found that the devices and method of the present invention permit a stable sample stream to be achieved over a wide range of sample flow rates; from as low as 10 µm/s to 10 m/s, which allows the devices and method to be used in systems and techniques requiring fast detection (e.g. based on fluorescence signals) as well as other systems and techniques which require a longer period of signal acquisition (e.g. Raman or other spectroscopic detection techniques). The present invention can therefore be used in a wide range of applications, analytical instruments or chemical processing devices.

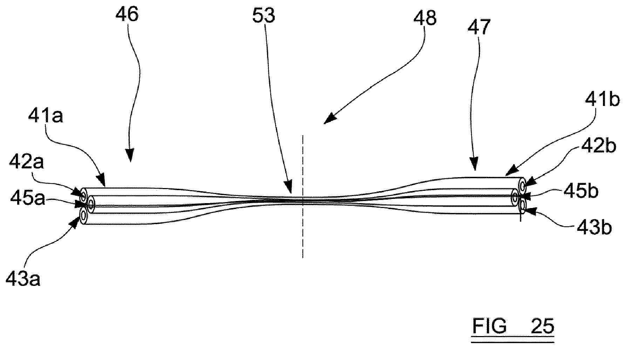

It is to be noted that whilst the present invention has been described above with specific reference to devices and methods which permit and involve the direction of a sample stream between an array of four sheath flow streams distributed there-around, in other embodiments it is possible to use a larger or smaller number of sheath streams. However, it is considered essential to provide at least three sheath flow streams (and of course the necessary flow channels for their direction) distributed around the central sample flow channel in order to enable sufficiently accurate focussing and control of the sample flow stream in three-dimensions. For example, whereas the embodiment described above with reference to figures 21 to 24 has four outer inlet capillary tubes 41a-44a and four outer outlet capillary tubes 41b-44b, arranged at the corners of a notional quadrilateral, for direction and collection of four sheath flow streams, it envisaged that a variant of such a device could be provided with three outer inlet capillary tubes and three corresponding outer outlet capillary tubes, arranged at the corners of a notional triangle, for direction and collection of three sheath flow streams. An example of such an arrangement will be described below with reference to figure 25, using the same reference numbers used above in connection with the arrangement of figures 21 to 24 to denote identical or equivalent parts.

Figure 25 shows a partially constructed device which may be fabricated from an initial assembly comprising three parallel glass capillary tubes arranged to define an axially extending space through the assembly. The capillary tubes may be fused or otherwise bonded together along their lengths, and are arranged at the corners of a notional triangle lying in a plane orthogonal to the aligned axes of the tubes. The tube assembly is drawn along its length so that it narrows in a central region 53. As will therefore be appreciated, the constituent capillary tubes will thus also become narrowed in the central region 53, as illustrated.

The drawn capillary tube assembly is then split in the narrowed central region 53, to form two generally identical sub-assemblies 46, 47 which may represent at least approximately mirror images of one another about a notional line of symmetry 48 at the point where the initial assembly was split. Each subassembly 46, 47 will thus comprise a respective set of three capillary tubes 41a, 42a, 43a and 41b, 42b, 42c.

A respective pre-drawn narrow-bore capillary tube 45a, 45b is then inserted axially into the axially extending space of each subassembly 46, 47, so as to become centrally positioned between the capillary tubes 41a, 42a, 43b and 41b, 42b, 43b thereof. The central capillary tubes 45a, 45b may be coated in a protective polyamide film, and in some embodiments may have an outer diameter of approximately 90 microns. After insertion, they may be secured in place between the other capillary tubes using a suitable adhesive (e.g. a cyanoacrylate based glue) to prevent any liquid from seeping between the three fused capillary tubes and the central narrow-bore tube of each subassembly during use of the device.

The subassemblies 46, 47 are shown slightly spaced apart from one another in figure 25. In the same manner as described above with reference to the arrangement shown in figures 21 to 24, in the orientation illustrated the left-hand subassembly 46 represents an inlet part, and the right-hand subassembly 47 represents an outlet part.

As will thus be appreciated, the inlet part 46 thus comprises a centrally located and generally linear inlet capillary tube 45a of narrow bore, and an array of three parallel but narrowing inlet capillary tubes 41, 42a, 43a distributed radially there-around. All of the inlet tubes have a respective inlet opening at the left-hand end and a respective outlet opening at their right-hand end (in the orientation illustrated).

Similarly, the outlet part 47 comprises a centrally located and generally linear outlet capillary tube 45b of narrow bore, and an array of three parallel but widening outlet capillary tubes 41b, 42b, 43b, distributed radially there-around. All of the outlet tubes have a respective inlet opening at their left-hand end and a respective outlet opening at their right-hand end (in the orientation illustrated).

The two sub-assemblies 46, 47 are then interconnected at their respective narrow ends. This may be achieved in a similar manner to that proposed above in connection with the arrangement of figures 21 to 24, and so it will be appreciated that the resulting device will again be provided with a detection chamber defining a detection zone between the outlet openings of the inlet capillary tubes 41a, 42a, 43a, 45a and the inlet openings of the outlet capillary tubes 41b, 42b, 43b, 45b. As will therefore be appreciated, the device of figure 25 will therefore function in a very similar manner to the device of figures 21 to 24.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

## Claims

1. A hydrodynamic focussing and sample collection device configured to focus a stream of sample fluid in three dimensions, the device being formed using photolithography, lamination, 3-D printing, micro-moulding or injection moulding the device comprising:
an array of sheath flow inlet channels (3, 5, 20a, 21a) distributed around a central sample flow inlet channel (4), each of said flow inlet channels having a respective outlet;
an array of sheath outlet collection channels (13, 15, 26, 27) distributed radially around a central sample outlet collection channel (14), each of said outlet collection channels having a respective inlet; and
a detection chamber defining a detection zone (8) located between said outlets and said inlets,
wherein: said sample flow inlet channel (4) and said sample outlet collection channel (14) are aligned and spaced-apart from one another across said detection chamber such that a stream of sample fluid (32) exiting the sample flow inlet channel (4) via its outlet (10) may be directed across the detection chamber, through the detection zone (8), and into the sample outlet collection channel (14) via its inlet (18); and
each said sheath flow inlet channel (3, 5, 20a, 21a) is aligned with and spaced-apart from a respective said sheath outlet collection channel (13, 15, 26, 27) across said detection chamber such that a stream of sheath fluid exiting the sheath flow inlet channel (3, 5, 20a, 21a) via its outlet may be directed across the detection chamber and into the respective sheath outlet collection channel (13, 15, 26, 27) via its inlet;
said sheath flow inlet channels (3, 5, 20a, 21a) being configured to direct respective sheath streams into contact with and parallel to the sample stream (32) exiting the sample flow inlet channel outlet (10);
wherein the sheath flow inlet channels comprise two stacked sheath flow inlet channels (3, 5) located on opposite sides of the sample flow inlet channel in a first direction, and
the sheath flow inlet channels further comprise two side sheath flow channels (20a, 21a) located on opposite sides of the stacked sheath and sample flow inlet channels in a second direction, the second direction being perpendicular to the first direction and perpendicular to the sample stream (32),
wherein the side sheath flow channels (20a, 21a) have a height in the first direction equal to, or greater than an overall combined height in the first direction of the stacked sheath and sample flow inlet channels (3, 4, 5).

2. A device according to claim 1 having a plurality of discrete said sample outlet collection channels (14).

3. A device according to any preceding claim, wherein the device is a microfluidic device formed on a substrate (2) and having a plurality of layers.

4. A device according to claim 3, wherein the sample flow inlet channel (4) and at least some of the sheath flow inlet channels (3, 5, 20a, 21a) each extend in respective planes parallel to the plane of the device substrate (2).

5. A device according to any of claims 1 to 4, wherein the device is formed using photolithography.

6. A hydrodynamic focussing and sample collection method performed using a device according to any preceding claim, in which the sample stream of fluid (32) is focussed in three-dimensions by a sheath fluid for collection, the method involving:
i) flowing said sample stream (32) simultaneously between and in contact with a set of sheath streams of said sheath fluid to focus the sample stream, wherein said set of sheath streams is provided by directing at least three individual sheath inlet streams, distributed radially around a centrally located said sample stream, towards said sample stream in such a manner that the individual sheath inlet streams have a direction of their flow substantially parallel to said sample stream;
ii) downstream collection of the resulting focussed sample stream (32) in a selected sample collection channel (14); and
iii) downstream collection of said sheath fluid in the form of a set of sheath outlet streams;
wherein the method comprises the step of adjusting the inlet and outlet flow rates of said sheath streams independently of one another and independently of the flow rate of the sample stream to thereby independently adjust the vertical and horizontal position of the sample stream (32),
said focussed sample stream (32) is collected in the sample outlet collection channel (14) and the sheath outlet streams are collected in sheath outlet collection channels (13, 15, 26, 27), and
said inlet and outlet flow rates of said sheath streams are adjusted to selectively direct the sample stream (32) into one of a plurality of said sample outlet collection channels (14).

7. A method according to claim 6, wherein the method is used to direct said focussed stream of the sample fluid (32) through the detection zone (8) in the detection chamber in which the sample stream is analysed.

8. A method according to claim 6 or claim 7, wherein said sample stream (32) is directed along the sample flow inlet channel (4) prior to contact with said sheath streams, and the sheath inlet streams are directed along respective sheath flow inlet channels (3, 5, 20a, 21a) prior to contact with said sample stream, wherein the sheath flow inlet channels (3, 5, 20a, 21a) are provided in an array distributed around said sample flow inlet channel (4).

9. A method according to any one of claims 6 to 8, wherein said inlet and outlet flow rates of said sheath streams are adjusted to focus said sample stream.

10. A method according to claim 7, wherein the detection chamber is defined between an outlet (10) of the sample flow inlet channel (4) and a respective inlet (18) of the or each sample outlet collection channel (14).

11. A method according to any one of claims 6 to 10, wherein three said sheath flows are provided.

12. A method according to any one of claims 6 to 10, wherein four said sheath flows are provided.

13. A method according to any one of claims 6 to 12, wherein the flow rate of the sample stream along the sample flow channel is between 10 µm/s and 10 m/s.

14. A method according to any one of claims 6 to 13, wherein the method is microfluidic.

## Patentansprüche

1. Hydrodynamische Fokussierungs- und Probenentnahmevorrichtung, die ausgelegt ist, eine Strömung von Probenfluid in drei Dimensionen zu fokussieren, wobei die Vorrichtung unter Verwendung von Photolithographie, Laminieren, 3D-Druck, Mikro-Formen oder -Spritzgießen ausgebildet wird, wobei die Vorrichtung Folgendes umfasst:
eine Anordnung von Mantelströmungseinlasskanälen (3, 5, 20a, 21a), die um einen zentralen Probenströmungseinlasskanal (4) herum verteilt angeordnet sind, wobei jeder der Strömungseinlasskanäle einen entsprechenden Auslass aufweist;
eine Anordnung von Mantelauslasssammelkanälen (13, 15, 26, 27), die radial um einen zentralen Probenauslasssammelkanal (14) herum verteilt angeordnet sind, wobei jeder der Auslasssammelkanäle einen entsprechenden Einlass aufweist; und
eine Detektionskammer, die eine Detektionszone (8) definiert, die zwischen den Auslässen und den Einlässen angeordnet ist,
wobei der Probenströmungseinlasskanal (4) und der Probenauslasssammelkanal (14) durch die Detektionskammer hindurch so ausgerichtet und voneinander beabstandet sind, dass eine Strömung von Probenfluid (32), die aus dem Probenströmungseinlasskanal (4) über dessen Auslass (10) austritt, durch die Detektionskammer hindurch durch die Detektionszone (8) und in den Probenauslasssammelkanal (14) über dessen Einlass (18) geleitet werden kann;
und
wobei jeder der Mantelströmungseinlasskanäle (3, 5, 20a, 21a) durch die Detektionskammer hindurch so mit einem entsprechenden Mantelauslasssammelkanal (13, 15, 26, 27) ausgerichtet und davon beabstandet ist, dass eine Strömung von Mantelfluid, das aus dem Mantelströmungseinlasskanal (3, 5, 20a, 21a) über dessen Auslass austritt, durch die Detektionskammer hindurch und in den entsprechenden Mantelauslasssammelkanal (13, 15, 26, 27) über dessen Einlass geleitet werden kann;
wobei die Mantelströmungseinlasskanäle (3, 5, 20a, 21a) so ausgelegt sind, um entsprechende Mantelströmungen in Kontakt mit und parallel zu der Probenströmung (32), die aus dem Probenströmungseinlasskanalauslass (10) austritt, zu leiten;
wobei die Mantelströmungseinlasskanäle zwei gestapelte Mantelströmungseinlasskanäle (3, 5) umfassen, die an entgegengesetzten Seiten des Probenströmungseinlasskanals in einer ersten Richtung angeordnet sind, und
wobei die Mantelströmungseinlasskanäle ferner zwei Seitenmantelströmungskanäle (20a, 21a) umfassen, die an entgegengesetzten Seiten der gestapelten Mantel- und Probenströmungseinlasskanäle in eine zweite Richtung angeordnet sind, wobei die zweite Richtung normal zu der ersten Richtung und normal zu der Probenströmung (32) ist,
wobei die Seitenmantelströmungskanäle (20a, 21a) eine Höhe in der ersten Richtung aufweisen, die größer oder gleich einer kombinierten Gesamthöhe in der ersten Richtung der gestapelten Mantel- und Probenströmungseinlasskanäle (3, 4, 5) ist.

2. Vorrichtung nach Anspruch 1, die eine Vielzahl von diskreten Probenauslasssammelkanälen (14) aufweist.

3. Vorrichtung nach einem der vorangegangenen Ansprüche, wobei die Vorrichtung eine Mikrofluidvorrichtung ist, die auf einem Substrat (2) ausgebildet ist und eine Vielzahl von Schichten aufweist.

4. Vorrichtung nach Anspruch 3, wobei sich der Probenströmungseinlasskanal (4) und zumindest manche der Mantelströmungseinlasskanäle (3, 5, 20a, 21a) jeweils in entsprechende Ebenen parallel zur Ebene des Vorrichtungssubstrats (2) erstrecken.

5. Vorrichtung nach einem der Ansprüche 1 bis 4, wobei die Vorrichtung unter Verwendung von Photolithographie ausgebildet wird.

6. Hydrodynamisches Fokussierungs- und Probenentnahmeverfahren, das unter Verwendung einer Vorrichtung nach einem der vorangegangenen Ansprüche durchgeführt wird, in dem die Probenströmung des Fluids (32) durch ein Mantelfluid zum Sammeln in drei Dimensionen fokussiert wird, wobei das Verfahren Folgendes umfasst:
i) Strömen der Probenströmung (32) gleichzeitig zwischen und in Kontakt mit einem Satz aus Mantelströmungen des Mantelfluids, um die Probenströmung zu fokussieren, wobei der Satz aus Mantelströmungen durch Leiten von zumindest drei einzelnen Manteleinlassströmungen bereitgestellt ist, die radial um eine zentral angeordnete Probenströmung herum verteilt angeordnet sind, in Richtung der Probenströmung, so dass die einzelnen Manteleinlassströmungen eine Strömungsrichtung aufweisen, die im Wesentlichen parallel zu der Probenströmung ist;
ii) Stromab-Sammeln der resultierenden fokussierten Probenströmung (32) in einem ausgewählten Probensammelkanal (14); und
iii) Stromab-Sammeln des Mantelfluids in Form eines Satzes aus Mantelauslassströmungen;
wobei das Verfahren den Schritt des Anpassens der Einlass- und Auslassströmungsraten der Mantelströmungen unabhängig voneinander und unabhängig von der Strömungsrate umfasst, um dadurch die vertikale und horizontale Position der Probenströmung (32) unabhängig anzupassen,
wobei die fokussierte Probenströmung (32) in dem Probenauslasssammelkanal (14) gesammelt wird, und die Mantelauslassströmungen in den Mantelauslasssammelkanälen (13, 15, 26, 27) gesammelt werden und
wobei die Einlass- und die Auslassströmungsraten der Mantelströmungen angepasst werden, um die Probenströmung (32) selektiv in einen von einer Vielzahl der Probenauslasssammelkanäle (14) zu leiten.

7. Verfahren nach Anspruch 6, wobei das Verfahren verwendet wird, um die fokussierte Strömung von Probenfluid (32) durch die Detektionszone (8) in der Detektionskammer zu leiten, in der die Probenströmung analysiert wird.

8. Verfahren nach Anspruch 6 oder 7, wobei die Probenströmung (32) vor dem Kontakt mit der Mantelströmung entlang des Probenströmungseinlasskanals (4) geleitet wird, und die Manteleinlassströmungen vor dem Kontakt mit der Probenströmung entlang entsprechender Mantelströmungseinlasskanäle (3, 5, 20a, 21a) geleitet werden, wobei die Mantelströmungseinlasskanäle (3, 5, 20a, 21a) in einer Anordnung bereitgestellt sind, die um den Probenströmungseinlasskanal (4) herum verteilt angeordnet ist.

9. Verfahren nach einem der Ansprüche 6 bis 8, wobei die Einlass- und die Auslassströmungsrate der Mantelströmungen eingestellt werden, um die Probenströmung zu fokussieren.

10. Verfahren nach Anspruch 7, wobei die Detektionskammer zwischen einem Auslass (10) des Probenströmungseinlasskanals (4) und einem entsprechenden Einlass (18) des oder jedes Probenauslasssammelkanals (14) definiert ist.

11. Verfahren nach einem der Ansprüche 6 bis 10, wobei drei der Mantelströmungen bereitgestellt werden.

12. Verfahren nach einem der Ansprüche 6 bis 10, wobei vier der Mantelströmungen bereitgestellt werden.

13. Verfahren nach einem der Ansprüche 6 bis 12, wobei die Strömungsrate der Probenströmung entlang des Probenströmungskanals zwischen 10 µm/s und 10 m/s liegt.

14. Verfahren nach einem der Ansprüche 6 bis 13, wobei das Verfahren mikrofluidisch ist.

## Revendications

1. Dispositif de collecte d'échantillon et de focalisation hydrodynamique configuré pour focaliser un courant de fluide d'échantillon en trois dimensions, le dispositif étant formé par photolithographie, stratification, impression 3D, micro-moulage ou moulage par injection, le dispositif comprenant :
un réseau de canaux d'entrée d'écoulement de gaine (3, 5, 20a, 21a) répartis autour d'un canal d'entrée d'écoulement d'échantillon central (4), chacun desdits canaux d'entrée d'écoulement ayant une sortie respective ;
un réseau de canaux de collecte de sortie de gaine (13, 15, 26, 27) répartis radialement autour d'un canal de collecte de sortie d'échantillon central (14), chacun desdits canaux de collecte de sortie ayant une entrée respective ; et
une chambre de détection définissant une zone de détection (8) située entre lesdites sorties et lesdites entrées,
dans lequel : ledit canal d'entrée d'écoulement d'échantillon (4) et ledit canal de collecte de sortie d'échantillon (14) sont alignés et espacés l'un de l'autre à travers ladite chambre de détection de sorte qu'un courant de fluide d'échantillon (32) sortant du canal d'entrée d'écoulement d'échantillon (4) via sa sortie (10) peut être dirigé à travers la chambre de détection, à travers la zone de détection (8), et dans le canal de collecte de sortie d'échantillon (14) via son entrée (18) ; et
chaque dit canal d'entrée d'écoulement de gaine (3, 5, 20a, 21a) est aligné avec un dit canal de collecte de sortie de gaine respectif (13, 15, 26, 27), et espacé de celui-ci, à travers ladite chambre de détection de sorte qu'un courant de fluide de gaine sortant du canal d'entrée d'écoulement de gaine (3, 5, 20a, 21a) via sa sortie peut être dirigé à travers la chambre de détection et dans le canal de collecte de sortie de gaine respectif (13, 15, 26, 27) via son entrée ;
lesdits canaux d'entrée d'écoulement de gaine (3, 5, 20a, 21a) étant configurés pour diriger des courants de gaine respectifs en contact avec le courant d'échantillon (32), et parallèlement à celui-ci, sortant de la sortie de canal d'entrée d'écoulement d'échantillon (10) ;
dans lequel les canaux d'entrée d'écoulement de gaine comprennent deux canaux d'entrée d'écoulement de gaine empilés (3, 5) situés sur des côtés opposés du canal d'entrée d'écoulement d'échantillon dans une première direction, et
les canaux d'entrée d'écoulement de gaine comprennent en outre deux canaux d'écoulement de gaine latéraux (20a, 21a) situés sur des côtés opposés des canaux d'entrée d'écoulement d'échantillon et de gaine empilés dans une seconde direction, la seconde direction étant perpendiculaire à la première direction et perpendiculaire au courant d'échantillon (32),
dans lequel les canaux d'écoulement de gaine latéraux (20a, 21a) ont une hauteur dans la première direction égale ou supérieure à une hauteur combinée globale dans la première direction des canaux d'entrée d'écoulement d'échantillon et de gaine empilés (3, 4, 5).

2. Dispositif selon la revendication 1, ayant une pluralité desdits canaux de collecte de sortie d'échantillon discrets (14).

3. Dispositif selon l'une quelconque des revendications précédentes, dans lequel le dispositif est un dispositif microfluidique formé sur un substrat (2) et ayant une pluralité de couches.

4. Dispositif selon la revendication 3, dans lequel le canal d'entrée d'écoulement d'échantillon (4) et au moins certains des canaux d'entrée d'écoulement de gaine (3, 5, 20a, 21a) s'étendent chacun dans des plans respectifs parallèles au plan du substrat de dispositif (2).

5. Dispositif selon l'une quelconque des revendications 1 à 4, dans lequel le dispositif est formé par photolithographie.

6. Procédé de collecte d'échantillon et de focalisation hydrodynamique réalisé en utilisant un dispositif selon l'une quelconque des revendications précédentes, dans lequel le courant d'échantillon de fluide (32) est focalisé en trois dimensions par un fluide de gaine pour une collecte, le procédé impliquant les étapes consistant à :
i) faire circuler ledit courant d'échantillon (32) simultanément entre un ensemble de courants de gaine dudit fluide de gaine, et en contact avec celui-ci, pour focaliser le courant d'échantillon, dans lequel ledit ensemble de courants de gaine est fourni en dirigeant au moins trois courants d'entrée de gaine individuels, répartis radialement autour d'un courant d'échantillon situé au centre, vers ledit courant d'échantillon de telle sorte que les courants d'entrée de gaine individuels ont une direction de leur écoulement sensiblement parallèle audit courant d'échantillon ;
ii) collecter en aval le courant d'échantillon focalisé résultant (32) dans un canal de collecte d'échantillon sélectionné (14) ; et
iii) collecter en aval ledit fluide de gaine sous la forme d'un ensemble de courants de sortie de gaine ;
dans lequel le procédé comprend l'étape consistant à ajuster les débits d'entrée et de sortie desdits courants de gaine indépendamment l'uns de l'autre et indépendamment du débit du courant d'échantillon pour ainsi ajuster indépendamment la position verticale et horizontale du courant d'échantillon (32),
ledit courant d'échantillon focalisé (32) est collecté dans le canal de collecte de sortie d'échantillon (14) et les courants de sortie de gaine sont collectés dans des canaux de collecte de sortie de gaine (13, 15, 26, 27), et
lesdits débits d'entrée et de sortie desdits courants de gaine sont ajustés pour diriger sélectivement le courant d'échantillon (32) dans l'un d'une pluralité desdits canaux de collecte de sortie d'échantillon (14).

7. Procédé selon la revendication 6, dans lequel le procédé est utilisé pour diriger ledit courant focalisé du fluide d'échantillon (32) à travers la zone de détection (8) dans la chambre de détection dans laquelle le courant d'échantillon est analysé.

8. Procédé selon la revendication 6 ou la revendication 7, dans lequel ledit courant d'échantillon (32) est dirigé le long du canal d'entrée d'écoulement d'échantillon (4) avant un contact avec lesdits courants de gaine, et les courants d'entrée de gaine sont dirigés le long de canaux d'entrée d'écoulement de gaine respectifs (3, 5, 20a, 21a) avant un contact avec ledit courant d'échantillon, dans lequel les canaux d'entrée d'écoulement de gaine (3, 5, 20a, 21a) sont disposés en un réseau réparti autour dudit canal d'entrée d'écoulement d'échantillon (4).

9. Procédé selon l'une quelconque des revendications 6 à 8, dans lequel lesdits débits d'entrée et de sortie desdits courants de gaine sont ajustés pour focaliser ledit courant d'échantillon.

10. Procédé selon la revendication 7, dans lequel la chambre de détection est définie entre une sortie (10) du canal d'entrée d'écoulement d'échantillon (4) et une entrée respective (18) du ou de chaque canal de collecte de sortie d'échantillon (14).

11. Procédé selon l'une quelconque des revendications 6 à 10, dans lequel trois desdits courants de gaine sont prévus.

12. Procédé selon l'une quelconque des revendications 6 à 10, dans lequel quatre desdits courants de gaine sont prévus.

13. Procédé selon l'une quelconque des revendications 6 à 12, dans lequel le débit du courant d'échantillon le long du canal d'écoulement d'échantillon est compris entre 10 µm/s et 10 m/s.

14. Procédé selon l'une quelconque des revendications 6 à 13, dans lequel le procédé est microfluidique.
